# EUROPEAN PATENT APPLICATION

(11) **EP 1 873 858 A2**
(43) Date of publication of application: **02.01.2008**
(21) Application number: 07012826.9
(22) Date of filing: 29.06.2007
(51) Int. Cl.: H01M 8/04, H01M 8/10

(54) **Fuel cell system and operation method therefor**

(30) Priority: 30.06.2006 JP 2006182419
(71) Applicant: Yamaha Hatsudoki Kabushiki Kaisha, Iwata-shi, Shizuoka-ken (JP)
(72) Inventor: Muramatsu, Yasuyuki, Iwata-shi Shizuoka-ken (JP)
(74) Representative: Grünecker, Kinkeldey, Stockmair & Schwanhäusser Anwaltssozietät

(57) **Abstract**

There is provided a fuel cell system capable of determining abnormalities in aqueous solution supply means without providing new sensors for abnormality detection, and an operation method therefor. A fuel cell system 100 includes a cell stack 102, and aqueous solution supply means for supplying the cell stack 102 with aqueous methanol solution. The aqueous solution supply means is capable of making circulatory supply of aqueous methanol solution to the cell stack 102, and includes: a main flow channel connected with a cell stack 102; a sub flow channel branched off the main flow channel and connected with a gas source; an aqueous solution tank 116 which holds aqueous methanol solution; and an aqueous solution pump 136. An ultrasonic sensor 154 is provided in the sub flow channel. The ultrasonic sensor 154 is located at a place higher than a liquid level in the aqueous solution tank 116 when the aqueous solution pump 136 is stopped. Abnormalities in the aqueous solution supply means are determined based on a result of concentration information detection from the ultrasonic sensor 154. The determination may also be based on a result of liquid amount detection in the aqueous solution tank 116.

## Description

### BACKGROUND OF THE INVENTION

### Field of the Invention

The present invention relates to fuel cell systems and operation methods therefor, and more specifically, to a fuel cell system provided with a protective function, and to an operation method therefor.

### Description of the Related Art

In fuel cell systems, aqueous fuel solution is supplied to anodes of the fuel cells by an aqueous solution pump whereas air which contains oxygen is supplied to cathodes of the fuel cells by an air pump. The aqueous solution pump is driven by transmitting rotating power of a motor which is driven with electric energy, to a pump main body via a rotating shaft. Here is a risk for example, that the rotating shaft is broken and the power of the motor is no longer transmitted to the pump main body, resulting in a stoppage in the supply of aqueous fuel solution, or that deterioration of the motor decreases performance of the motor, resulting in a reduced amount of supply of aqueous fuel solution.

Such an abnormality will cause uneven distribution of the fuel around the anodes, and deterioration of electrolyte film. Decreased amount of supply of aqueous fuel solution will lead to such a problem as decreased output from the fuel cells.

Other potential abnormalities include breakage of pipes which serve as a flow channel for aqueous fuel solution, and hole formation in the pipes. These abnormalities lead to interrupted or decreased supply of aqueous fuel solution, resulting in similar problems as caused by the pump troubles.

Presence or absence of the above-described abnormalities may be determined on the basis of sensor detection results from flow sensors and pressure sensors disposed in the flow channel of the aqueous fuel solution. Patent Document 1 discloses a fuel cell system which detects abnormalities in a cooling system for the fuel cells based on the amount of flow and pressure of a cooling medium.
Patent Document 1: JP-A 2002-184435

However, if the technique disclosed in Patent Document 1 is to be used for abnormality determination in aqueous solution supply means, sensors for flow detection and sensors for pressure detection must be newly provided.

### SUMMARY OF THE INVENTION

A primary object of the present invention therefore is to provide a fuel cell system capable of determining abnormalities in aqueous solution supply means without providing new sensors for abnormality detection, and an operation method therefor.

According to an aspect of the present invention, there is provided a fuel cell system which includes: a fuel cell; aqueous solution supply means for supplying the fuel cell with aqueous fuel solution; concentration detection means provided in the aqueous solution supply means for detecting concentration information of the aqueous fuel solution based on a physical property of the aqueous fuel solution; and determination means for determining an abnormality in the aqueous solution supply means based on a detection result from the concentration detection means.

According to another aspect of the present invention, there is provided a method of operating a fuel cell system which includes a fuel cell and aqueous solution supply means for supplying the fuel cell with aqueous fuel solution. The method includes: a concentration detection step of detecting concentration information of the aqueous fuel solution based on a physical property of the aqueous fuel solution; and a determination step of determining an abnormality in the aqueous solution supply means based on a detection result in the concentration detection step.

In the present invention, if an abnormality occurs in the aqueous solution supply means such as in a flow channel, and air comes from outside into the aqueous fuel solution to reach the concentration detection means, detection of concentration information based on a physical property of aqueous fuel solution becomes impossible. By utilizing this phenomenon, it is possible to determine an abnormality in the aqueous solution supply means based on a result of the concentration information detection. In particular, abnormalities on the upstream side than the concentration detection means (concentration detection location) in the aqueous solution supply means can be detected advantageously. Also, because a result of fuel concentration detection is used as described, it is possible to determine an abnormality in the aqueous solution supply means without providing new sensors for abnormality detection as is required in the prior art.

Preferably, the aqueous solution supply means includes an aqueous solution pump, and the concentration detection means is located where gas is present when the aqueous solution pump is stopped, in the aqueous solution supply means. In this case, if the aqueous solution pump stops due to an abnormality, it becomes impossible to supply aqueous fuel solution to the concentration detection means or the amount of supply decreases, resulting in introduction of gas into the concentration detection means. As a result, detection of concentration information using a physical property of aqueous fuel solution becomes impossible. By utilizing this phenomenon, it is possible to determine an abnormality in the aqueous solution supply means based on a result of the concentration information detection. In particular, abnormalities in the aqueous solution pump can be detected advantageously.

Further preferably, the aqueous solution supply means includes: aqueous solution holding means for holding aqueous fuel solution to be supplied to the fuel cell; a main flow channel which is connected with the fuel cell; and a sub flow channel which branches off the main flow channel and is connected with a gas source. The concentration detection means is located higher than a liquid level in the aqueous solution holding means when the aqueous solution pump is stopped. In this case, if the aqueous solution pump stops due to an abnormality, gas from the gas source is introduced into the main flow channel via the sub flow channel, lowering the liquid level in the main flow channel down to the liquid level in the aqueous solution holding means. As a result, gas is introduced into the concentration detection means, and the abnormality in the aqueous solution pump can be detected easily.

Further, preferably, the concentration detection means is provided in the sub flow channel. In this case, by introducing aqueous fuel solution into the sub flow channel, it becomes possible to make concentration information detection while the flow of aqueous fuel solution is slowed down or stopped. This enables to detect an abnormality in the aqueous solution pump accurately without stopping supply of aqueous fuel solution to the fuel cell.

Preferably, the fuel cell system further includes flow-in control means for controlling a flow of aqueous fuel solution into the sub flow channel. In this case, the amount of aqueous fuel solution which flows from the main flow channel into the sub flow channel can be controlled easily. Therefore, it becomes possible to detect abnormalities existing in the aqueous solution pump smoothly in the sub flow channel while aqueous fuel solution in the main flow channel is supplied smoothly to the fuel cell.

Further preferably, the gas source is provided by a gas layer in the aqueous solution holding means. In this case, the gas source is provided easily by simply connecting the sub flow channel with the gas layer in the aqueous solution holding means.

Further, preferably, the aqueous solution supply means includes aqueous solution holding means for holding the aqueous fuel solution to be supplied to the fuel cell, and is capable of making circulatory supply of the aqueous fuel solution to the fuel cell. The present invention can be applied suitably to fuel cell systems which are capable of making circulatory supply of aqueous fuel solution to the fuel cell as described.

It should be noted here that in the case where the aqueous solution supply means has a capability of making circulatory supply of aqueous fuel solution as described above, the term "upstream of the concentration detection means" refers to a span from the concentration detection means, through the aqueous solution holding means, to the anode exit in the fuel cell.

Preferably, the fuel cell system further includes liquid amount detection means for detecting an amount of liquid in the aqueous solution holding means, and the determination means determines an abnormality in the aqueous solution supply means based on a detection result from the concentration detection means and a detection result from the liquid amount detection means. By taking also into account a detection result of the amount of liquid in the aqueous solution holding means as described, it becomes possible to determine abnormalities in the aqueous solution supply means more accurately. In particular, it becomes possible to detect abnormalities advantageously between the aqueous solution holding means and concentration detection means (concentration detection location).

Further preferably, the concentration detection means is provided by an ultrasonic sensor which includes a transmitter unit for transmitting an ultrasonic wave and a receiver unit for receiving the ultrasonic wave. In this case, concentration information detection of the aqueous fuel solution is based on a travel time (propagation speed) of the ultrasonic wave which is obtained by receiving an ultrasonic wave from the transmitter unit by the receiver unit. However, if an abnormality occurs in the aqueous solution supply means, gas is introduced into a space between the transmitter unit and the receiver unit, and it becomes impossible to detect concentration information. Therefore, by utilizing an ultrasonic sensor, abnormalities in the aqueous solution supply means can be determined simply and easily.

Preferably, the fuel cell system further includes: air supply means for supplying the fuel cell with air which contains oxygen; and air supply control means for controlling an operation of the air supply means based on a determination result from the determination means. When an abnormality exists in the aqueous solution supply means, and air is supplied under ceased or decreased supply of aqueous fuel solution, a shortage of aqueous fuel solution occurs in part of the fuel cell, resulting in non-uniform power generation reactions in the fuel cell, which can be a cause of electrolyte film deterioration. Therefore, deterioration of the electrolyte film can be prevented by stopping the air supply means when there is a determination that an abnormality exists in the aqueous solution supply means. Also, if control is provided in such a way that the air supply means is driven after confirming that there is no abnormality in the aqueous solution supply means based on a result of concentration information detection at the time of start up, it becomes possible to prevent deterioration of the electrolyte film reliably.

Further preferably, the fuel cell system further includes notification means for notifying a determination result from the determination means. By notifying abnormalities in the aqueous solution supply means, convenience of the fuel cell system is improved.

If a fuel cell system is to be mounted on transport equipment, it is desirable that fewer constituent parts are used to make the system compact. According to the present invention, abnormalities in the aqueous solution supply means can be determined without providing new sensors for abnormality detection, and it is possible to construct the system compactly without increasing the number of constituent parts. Therefore, the present invention can be suitably applied to transport equipment.

The above-described object, other objects, characteristics, aspects and advantages of the present invention will become clearer from the following detailed description of embodiments to be made with reference to the attached drawings.

### BRIEF DESCRIPTION OF THE DRAWINGS

Fig. 1 is a left side view of a motorbike according to an embodiment of the present invention.
Fig. 2 is a system diagram showing piping in a fuel cell system.
Fig. 3 is a block diagram showing an electrical configuration of the fuel cell system.
Fig. 4 is a graph showing relationship between ultrasonic wave travel time, liquid temperature and fuel concentration.
Fig. 5 is a flowchart which shows an example of operation according to the present invention.
Fig. 6 is a flowchart which shows another example of operation according to the present invention.
Fig. 7 is a flowchart which shows another example of operation according to the present invention.

### DETAILED DESCRIPTION OF PREFERRED EMBODIMENTS

Hereinafter, embodiments of the present invention will be described, with reference to the drawings. The embodiments are cases in which a fuel cell system 100 according to the present invention is equipped in a motorbike 10 as an example of transport equipment.

The description will first cover the motorbike 10. It is noted that the terms left and right, front and rear, up and down as used in the embodiments of the present invention are determined from the normal state of riding, i.e., as viewed by the driver sitting on the driver's seat of the motorbike 10, with the driver facing toward a handle 24.

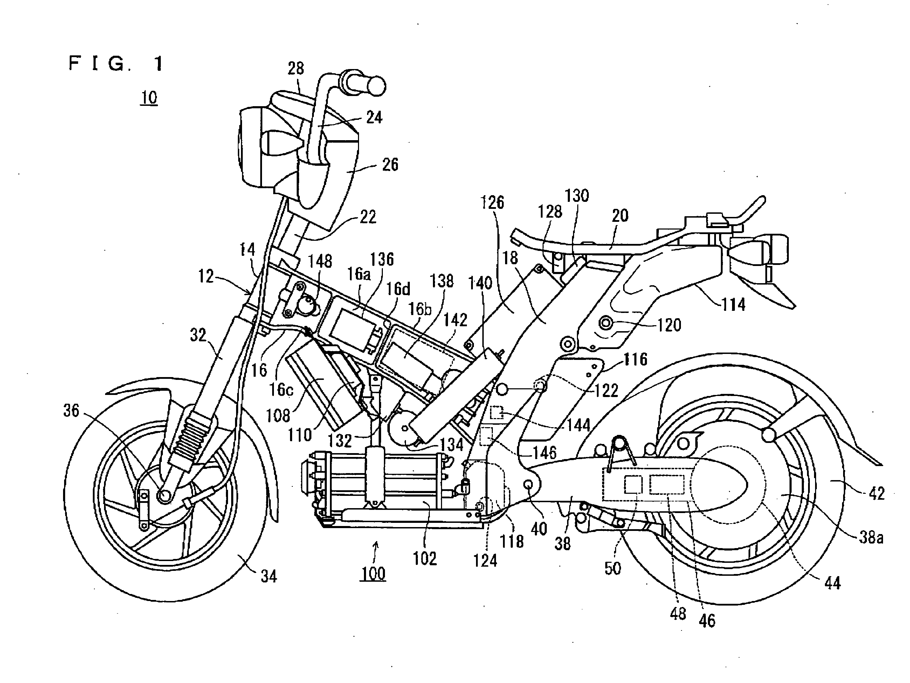

Referring to Fig. 1, the motorbike 10 includes a vehicle frame 12. The vehicle frame 12 has a head pipe 14, a front frame 16 which has an I-shaped vertical section and extends in a rearward and downward direction from the head pipe 14, a rear frame 18 which is connected with a rear end of the front frame 16 and rising in a rearward and upward direction, and a seat rail 20 which is attached to a top end of the rear frame 18.

The front frame 16 includes: a plate member 16a which has a width in the vertical direction and extends in a rearward and downward direction, perpendicularly to the lateral directions of the vehicle; flanges 16b, 16c which are formed respectively at an upper end edge and a lower end edge of the plate member 16a, extend in a rearward and downward direction and have a width in the lateral directions; and reinforcing ribs 16d protruding from both surfaces of the plate member 16a. The reinforcing ribs 16d and the flanges 16b, 16c define storage walls, providing compartments on both surfaces of the plate member 16a defining storage spaces for components of the fuel cell system 100 to be described later.

The rear frame 18 includes: a pair of left and right plate members each having a width in the front and rear directions, extending in a rearward and upward direction, and sandwiching a rear end of the front frame 16. Note that Fig. 1 shows the left plate member of the rear frame 18.

A steering shaft 22 is pivotably inserted in the head pipe 14 for steering the vehicle. A handle support 26 is provided at an upper end of the steering shaft 22, to which a handle 24 is fixed. The handle support 26 has an upper end provided with a display/operation board 28.

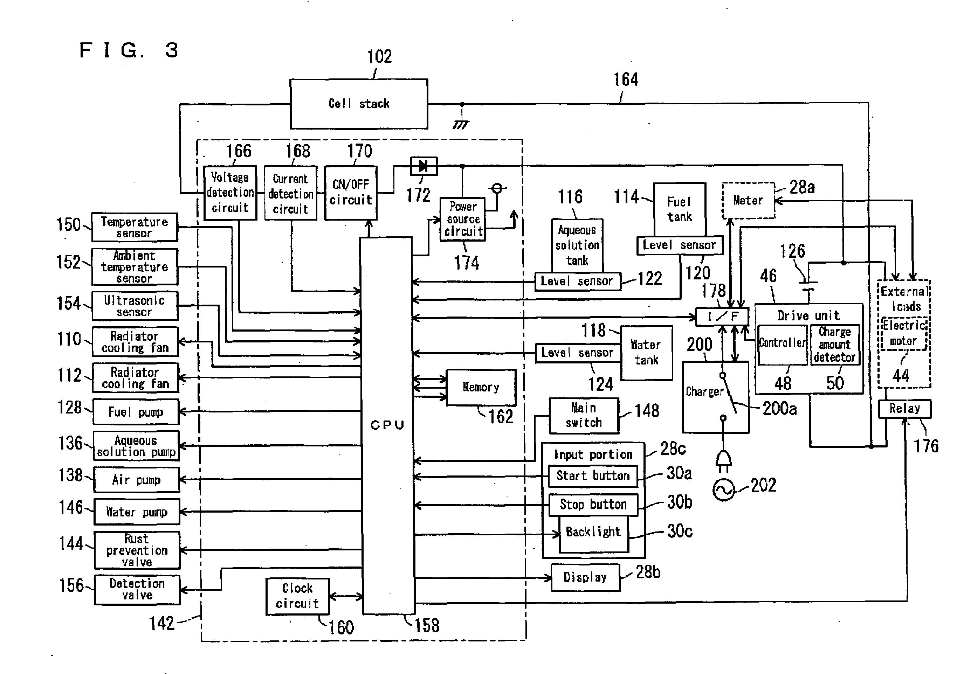

Referring also to Fig. 3, the display/operation board 28 is an integrated dashboard including: a meter 28a for measuring and displaying various data concerning an electric motor 44 (to be described later) for driving the motorbike 10; a display 28b provided by, e.g:, a liquid crystal display, for providing the driver with a variety of information concerning the ride; and an input portion 28c for inputting a variety of commands and data. The input portion 28c is provided with: a start button 30a for switching a relay 176 thereby connecting a cell stack 102 and a secondary battery 126 (to be described later) with external loads such as an electric motor 44; a stop button 30b for issuing a command to stop power generation in the cell stack 102 after an operation stop command is issued; and a backlight 30c for illuminating the stop button 30b.

As shown in Fig. 1, a pair of left and right' front forks 32 extend from a bottom end of the steering shaft 22. Each of the front forks 32 includes a bottom end supporting a front wheel 34 via a front wheel shaft 36. The front wheel 34 is suspended by the front forks 32, and is rotatable around the front wheel shaft 36.

On the other hand, a frame-like seat rail 20 which extends in the front and rear directions is fixed by, e.g., welding to an upper end of the rear frame 18. An unillustrated seat is pivotably provided on the seat rail 20.

The rear frame 18 includes a lower end which pivotably supports a swing arm (rear arm) 38 via a pivot shaft 40. The swing arm 38 has a rear end 38a incorporating an electric motor 44 of an axial gap type for example, which is connected with the rear wheel 42 to rotate the rear wheel 42. The swing arm 38 also incorporates a drive unit 46 which is electrically connected with the electric motor 44. The drive unit 46 includes a controller 48 for controlling the rotating drive of the electric motor 44, and a charge amount detector 50 for detecting the amount of charge in the secondary battery 126. The swing arm 38 and a rear wheel 42 are suspended with an unillustrated rear cushion with respect to the rear frame 18.

The motorbike 10 as described is equipped with a fuel cell system 100, with its constituent members being disposed along the vehicle frame 12. The fuel cell system 100 generates electric energy for driving the electric motor 44 and other system components.

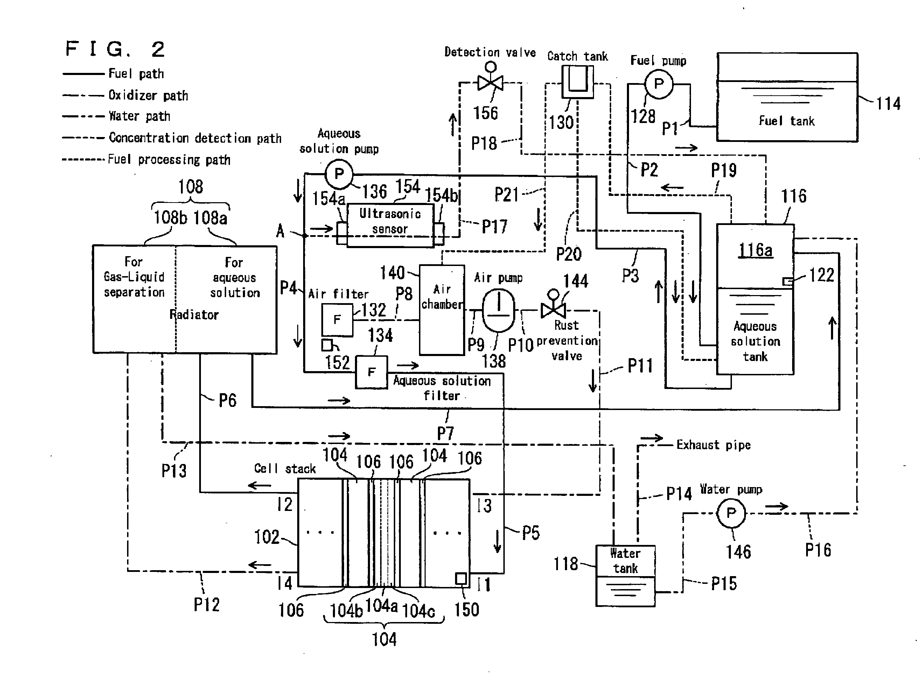

Hereinafter, the fuel cell system 100 will be described with reference to Fig. 1 and Fig. 2.

The fuel cell system 100 is a direct methanol fuel cell system which uses methanol (an aqueous solution of methanol) directly without reformation, for generation of electric energy (power generation).

The fuel cell system 100 includes a fuel cell stack (hereinafter simply called cell stack) 102. As shown in Fig. 1, the cell stack 102 is suspended from the flange 16c, and is disposed below the front frame 16.

As shown in Fig. 2, the cell stack 102 includes a plurality of fuel cells (individual fuel cells) 104 layered (stacked) in alternation with separators 106. Each fuel cell 104 is capable of generating electric power through electrochemical reactions between hydrogen ion based on methanol and oxygen. Each fuel cell 104 in the cell stack 102 includes an electrolyte film 104a provided by a solid polymer film for example, and a pair of an anode (fuel electrode) 104b and a cathode (air electrode) 104c opposed to each other, with the electrolyte film 104a in between. The anode 104b and the cathode 104c each include a platinum catalyst layer provided on the side closer to the electrolyte film 104a.

As shown in Fig. 1, a radiator unit 108 is disposed below the front frame 16, above the cell stack 102. The radiator unit 108 has a front surface facing in a downward direction so it can receive sufficient air and wind while the vehicle is in motion.

As shown in Fig. 2, the radiator unit 108 includes integrally therein, a radiator 108a for aqueous solution and a radiator 108b for gas-liquid separation. On a back side of the radiator unit 108, there is a fan 110 provided to cool the radiator 108a, and there is another fan 112 (See Fig. 3) provided to cool the radiator 108b. In Fig. 1, the radiators 108a and 108b are disposed side by side, with one on the left-hand side and the other on the right-hand side, and the figure shows the fan 110 for cooling the left-hand side radiator 108a.

A fuel tank 114, an aqueous solution tank 116 and a water tank 118 are disposed in this order from top to down, between the pair of plate members in the rear frame 18.

The fuel tank 114 is below the seat rail 20 and is attached to a rear end of the seat rail 20. The fuel tank 114 contains a methanol fuel (high concentration aqueous solution of methanol) having a high concentration level (containing methanol at approximately 50 wt%, for example) which is used as fuel for the electrochemical reaction in the cell stack 102. The fuel tank 114 is provided with a level sensor 120 for detecting the height of liquid surface, i.e., an amount of liquid of the methanol fuel in the fuel tank 114.

The aqueous solution tank 116 is disposed below the fuel tank 114, and is attached to the rear frame 18. The aqueous solution tank 116 contains aqueous methanol solution, which is a solution of the methanol fuel from the fuel tank 114 diluted to a suitable concentration (containing methanol at approximately 3 wt%, for example) for the electrochemical reaction in the cell stack 102. The aqueous solution tank 116 is provided with a level sensor 122 for detecting the height of liquid surface, i.e., an amount of liquid of the aqueous methanol solution in the aqueous solution tank 116.

The water tank 118, disposed behind the cell stack 102, is mounted on the rear frame 18. A level sensor 124 is attached to the water tank 118 in order to detect the height of water surface, i.e., an amount of water in the water tank 118.

In front of the fuel tank 114 and above the flange 16b of the front frame 16 is the secondary battery 126. The secondary battery 126 stores the electric power from the cell stack 102, and supplies the electric power to the electric components in response to commands from a controller 142 (to be described later).

Above the secondary battery 126 and below the seat rail 20, a fuel pump 128 is disposed. Further, a catch tank 130 is disposed in front of the fuel tank 114, i.e., above and behind the secondary battery 126.

An air filter 132 is disposed in a space surrounded by the front frame 16, the cell stack 102 and the radiator unit 108 for removing impurities such as dust contained in gas. Behind and below the air filter 132, an aqueous solution filter 134 is disposed.

An aqueous solution pump 136 and an air pump 138 are housed in the storage space on the left side of the front frame 16. On the left side of the air pump 138 is an air chamber 140.

The controller 142, a rust prevention valve 144 and a water pump 146 are disposed in the storage space on the right side of the front frame 16.

A main switch 148 is provided in the front frame 16, penetrating the storage space in the front frame 16 from right to left. Turning on the main switch 148 gives an operation start command to the controller 142 and turning off the main switch 14B gives an operation stop command to the controller 142.

As shown in Fig. 2, the fuel tank 114 and the fuel pump 128 are connected with each other by a pipe P1. The fuel pump 128 and the aqueous solution tank 116 are connected with each other by a pipe P2. The aqueous solution tank 116 and the aqueous solution pump 136 are connected with each other by a pipe P3. The aqueous solution pump 136 and the aqueous solution filter 134 are connected with each other by a pipe P4. The aqueous solution filter 134 and the cell stack 102 are connected with each other by a pipe P5. The pipe P5 is connected with an anode inlet I1 of the cell stack 102. By driving the aqueous solution pump 136, aqueous methanol solution is supplied to the cell stack 102. A temperature sensor 150 is provided near the anode inlet T1 of the cell stack 102 in order to detect the temperature of aqueous methanol solution. By detecting the temperature of aqueous methanol solution which flows through the cell stack 102 using the temperature sensor 150, the temperature of the cell stack 102 can be detected.

The cell stack 102 and the aqueous solution radiator 108a are connected with each other by a pipe P6, and the radiator 108a and the aqueous solution tank 116 are connected with each other by a pipe P7. The pipe P6 is connected with an anode outlet 12 of the cell stack 102.

The pipes P1 through P7 serve primarily as a flow path for fuel.

The air filter 132 and the air chamber 140 are connected with each other by a pipe P8. The air chamber 140 and the air pump 138 are connected with each other by a pipe P9, the air pump 138 and the rust prevention valve 144 are connected with each other by a pipe P10 whereas the rust prevention valve 144 and the fuel cell stack 102 are connected with each other by a pipe P11. The pipe P11 is connected with a cathode inlet 13 of the cell stack 102. When the fuel cell system 100 generates power, the rust prevention valve 144 is opened. By driving the air pump 138 under this condition, air containing oxygen is introduced from outside. The rust prevention valve 144 is closed when the fuel cell system 100 is stopped, prevents backflow of water vapor into the air pump 138, and thereby prevents rusting of the air pump 138. An ambient temperature sensor 152 is provided near the air filter 132 for detection of an ambient temperature.

The cell stack 102 and the gas-liquid separation radiator 108b are connected with each other by a pipe P12. The radiator 108b and the water tank 118 are connected with each other by a pipe P13. The water tank 118 is provided with a pipe (an exhaust pipe) P14.

The pipes P8 through P14 serve primarily as a flow path for oxidizer.

The water tank 118 and the water pump 146 are connected with each other by a pipe P15 whereas the water pump 146 and the aqueous solution tank 116 are connected with each other by a pipe P16.

The pipes P15, P16 serve as a flow path for water.

Also, a pipe P17 is connected to a branching section A of the pipe P4 so that part of aqueous methanol solution which flows through the pipe P4 will flow in. An ultrasonic sensor 154 is attached to the pipe P17. The ultrasonic sensor 154 is used for detecting the methanol concentration in aqueous methanol solution (a ratio of methanol in aqueous methanol solution), based on the principle that a travel time (propagation speed) of ultrasonic waves changes depending on the methanol concentration. The ultrasonic sensor 154 includes a transmitter unit 154a and a receiver unit 154b. An ultrasonic wave transmitted from the transmitter unit 154a is received by the receiver unit 154b to detect an ultrasonic wave travel time in the pipe P17, and a voltage value which corresponds to the travel time is taken as physical concentration information. The controller 142 detects the methanol concentration of the aqueous methanol solution in the pipe P17 based on the concentration information. The ultrasonic sensor 154 is provided at a location where gas is introduced into the ultrasonic sensor 154 at a time of abnormality in aqueous solution supply means. In other words, the ultrasonic sensor 154 is provided at a location higher than the liquid level at a time of abnormality in the aqueous solution supply means. In the example shown in Fig. 2, if the aqueous solution pump 136 stops during normal operation and the detection valve 156 is opened for concentration measurement, gas in the aqueous solution tank 116 is introduced through the pipe P18 into the pipes P17 and P4. Because of this, the liquid level in the main flow channel (the pipes P3 through P5) lowers to the liquid level in the aqueous solution tank 116. The ultrasonic sensor 154 is higher than the liquid level in the main flow channel and therefore higher than the liquid level in the aqueous solution tank 116, and gas exists in the ultrasonic sensor 154.

A detection valve 156 is connected with the pipe P17. The detection valve 156 and a gas layer 116a of the aqueous solution tank 116 are connected with each other by a pipe P18. When detecting methanol concentration, the detection valve 156 is closed to stop the flow of aqueous methanol solution in the pipe P17. After the detection of the methanol concentration, the detection valve 156 is opened to release the aqueous methanol solution, whose concentration has been detected, back to the aqueous solution tank 116.

The pipes P17, P18 serve as a flow path primarily for concentration detection.

The aqueous solution tank 116 and the catch tank 130 are connected with each other by pipes P19, P20. The catch tank 130 and the air chamber 140 are connected with each other by a pipe P21.

The pipes P19 through P21 constitute a flow path primarily for fuel processing.

Next, reference will be made to Fig. 3, to cover an electrical configuration of the fuel cell system 100.

The controller 142 of the fuel cell system 100 includes: a CPU 158 for performing necessary calculations and controlling operations of the fuel cell system 100; a clock circuit 160 which provides the CPU 158 with clock signals; a memory 162 provided by, e.g., an EEPROM for storing programs and data for controlling the operations of the fuel cell system 100 as well as calculation data, etc; a voltage detection circuit 166 for detecting a voltage in an electric circuit 164 for connecting the cell stack 102 with external loads; a current detection circuit 168 for detecting an electric current which passes through the fuel cells 104, i.e., the cell stack 102; an ON/OFF circuit 170 for opening and closing the electric circuit 164; a diode 172 placed in the electric circuit 164; and a power source circuit 174 for providing the electric circuit 164 with a predetermined voltage.

The CPU 158 of the controller 142 as described above is supplied with detection signals from the level sensors 120, 122 and 124, as well as detection signals from the temperature sensor 150, the ambient temperature sensor 152 and the ultrasonic sensor 154. The CPU 158 is also supplied with input signals from the main switch 148 for turning ON or OFF the electric power, and input signals from the start button 30a and the stop button 30b in the input portion 28c. Further, the CPU 158 is supplied with detection signals from a charge amount detector 50. The CPU 158 calculates a charge rate of the secondary battery 126 (a ratio of the amount of charge with respect to the capacity of the secondary battery 126), using the detection signal from the charge amount detector 50 and information on the capacity of the secondary battery 126. Further, the CPU 158 is supplied with a voltage detection value from the voltage detection circuit 166 and a current detection value from the current detection circuit 168. The CPU 158 calculates an output of the cell stack 102 from the voltage detection value and the current detection value.

The CPU 158 controls system components such as the fuel pump 128, the aqueous solution pump 136, the air pump 138, the water pump 146, the fans 11,0, 112, the rust prevention valve 144 and the detection valve 156. The CPU 158 also controls the display 28b which displays various information for the driver of the motorbike 10. Still further, the CPU 158 controls turning ON and OFF of the backlight 30c in the input portion 28c.

The cell stack 102 is connected with the secondary battery 126 and the drive unit 46. The secondary battery 126 and the drive unit 46 are connected with external loads such as the electric motor 44, via the relay 176. The secondary battery 126 complements the output from the cell stack 102, by being charged with electric power from the cell stack 102 and discharging the electricity to supply power to the electric motor 44, the drive unit 46 and the system components, etc.

The electric motor 44 is connected with the meter 28a for measuring various data concerning the electric motor 44. The data and status information of the electric motor 44 obtained by the meter 28a are supplied to the CPU 158 via the interface circuit 178.

In addition, a charger 200 is connectable with the interface circuit 178. The charger 200 is connectable with an external power source (commercial power source) 202. When the interface circuit 178 is connected with the external power source 202 via the charger 200, an external power source connection signal is sent to the CPU 158 via the interface circuit 178. The charger 200 has a switch 200a which can be turned ON/OFF by the CPU 158.

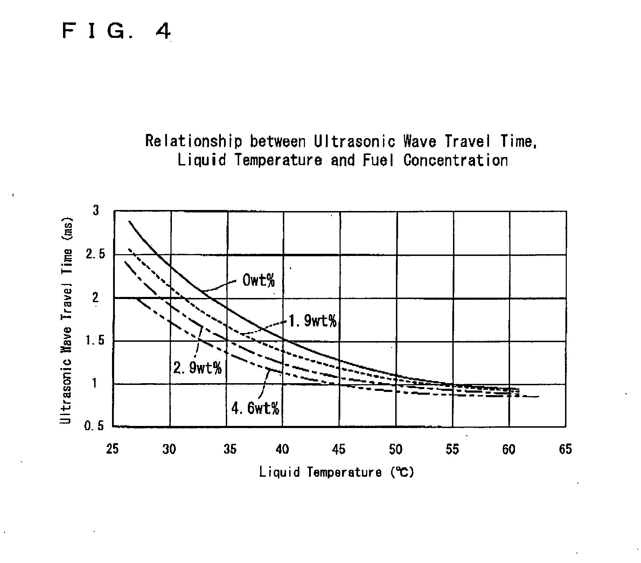

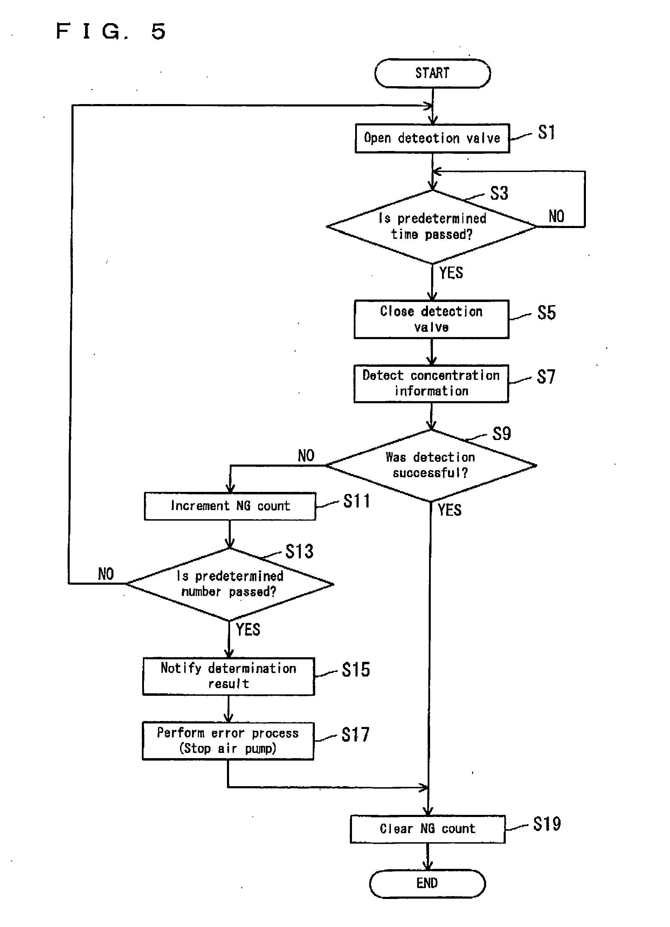

The memory 162 stores programs for performing operations shown in Fig. 5 through Fig. 7. Also, the memory 162 stores an NG count, a predetermined number which serves as a threshold value of the NG count, a liquid amount recovery operation flag, a first predetermined time and a second predetermined time which serve as threshold values, calculation data, table data which indicates relationship, between ultrasonic wave travel time (concentration information), liquid temperature and fuel concentration as shown in Fig. 4, etc.

Although Fig. 4 shows only four relationships (curves) between the travel time and the liquid temperature at four different concentrations (0 wt%, 1.9 wt%, 2.9 wt% and 4.6 wt%), actually, the table data which covers five or more curves are used so that a fuel concentration will be determined once a travel time and a liquid temperature are given.

Specifically, when concentration information and a liquid temperature are obtained, the CPU 158 makes reference to the table data, and detects a concentration of aqueous methanol solution.

In the present embodiment, the aqueous solution supply means includes the pipes P3 through P7, P17 and P18, the aqueous solution tank 116, the aqueous solution pump 136, the aqueous solution filter 134 and the aqueous solution radiator 108a, and is capable of making circulatory supply of aqueous methanol solution to the cell stack 102. The aqueous solution tank 116 defines aqueous solution holding means. The ultrasonic sensor 154 defines concentration detection means. The level sensor 122 defines liquid amount detection means. The pipes P3 through P5 define a main flow channel, the pipes P17 and P18 define a sub flow channel. The detection valve 156 and the CPU 158 define flow-in control means. Air supply means includes the air pump 138. The CPU 158 defines determination means and air supply control means. The gas layer 116a in the aqueous solution tank 116 defines a gas source. The display portion 28b defines notification means.

Next, description will cover a main process during the fuel cell system 100 is in operation.

when the main switch 148 is turned ON, the fuel cell system 100 starts the controller 142 and commences its operation. Then, when the start button 30a is pressed after the controller 142 is started, the relay 176 is switched to connect external loads such as the electric motor 44 with the cell stack 102 and the secondary battery 126. When the charge rate of the secondary battery 126 becomes not higher than a predetermined value, electricity from the secondary battery 126 is used to drive the system components such as the aqueous solution pump 136 and the air pump 138, and thus power generation is started in the cell stack 102.

It should be noted here that the external loads refer to loads which consume electricity other than the electricity required for maintaining the power generation in the cell stack 102. Specifically, the external loads in the present embodiment include the electric motor 44, the headlight of the motorbike 10, and so on.

Referring now to Fig. 2, aqueous methanol solution in the aqueous solution tank 116 is sent via the pipes P3, P4 to the aqueous solution filter 134 as the aqueous solution pump 136 is driven. The aqueous solution filter 134 removes impurities and so on from the aqueous methanol solution, then the aqueous methanol solution is sent through the pipe P5 and the anode inlet I1, directly to the anode 104b in each of the fuel cells 104 which constitute the cell stack 102.

Meanwhile, gas (primarily containing carbon dioxide, vaporized methanol and water vapor) in the aqueous solution tank 116 is supplied via the pipe P19 to the catch tank 130. The methanol vapor and water vapor are cooled in the catch tank 130, and the aqueous methanol solution obtained in the catch tank 130 is returned via the pipe P20 to the aqueous solution tank 116. On the other hand, gas (containing carbon dioxide, non-liquefied methanol and water vapor) in the catch tank 130 is supplied via the pipe P21 to the air chamber 140.

On the other hand, as the air pump 138 is driven, air is introduced through the air filter 132 and flows through the pipe P8 into the air chamber 140 where noise is silenced. The air which was introduced to the air chamber 140 and gas from the catch tank 130 flow via the pipe P9 to the air pump 138, and then through the pipe P10, the rust prevention valve 144, the pipe P11 and the cathode inlet I3, into the cathode 104c in each of the fuel cells 104 which constitute the cell stack 102.

At the anode 104b in each fuel cell 104, methanol and water in the supplied aqueous methanol solution chemically react with each other to produce carbon dioxide and hydrogen ions. The produced hydrogen ions flow to the cathode 104c via the electrolyte film 104a, and electrochemically react with oxygen in the air supplied to the cathode 104c, to produce water (water vapor) and electric energy. Thus, power generation is performed in the cell stack 102. The electricity from the cell stack 102 is used to charge the secondary battery 126, to drive the motorbike 10 and so on. The temperature of the cell stack 102 is increased by the heat associated with the electrochemical reactions. The output of the cell stack 102 increases as the temperature rises, and the cell stack 102 becomes able to perform normal constant power generation at approximately 60°C. In other words, the fuel cell system 100 transfers to the normal operation when the temperature of the cell stack 102 is at approximately 60°C.

The temperatures of carbon dioxide produced at the anode 104b in each fuel cell 104 and of unused aqueous methanol solution are increased (up to approximately 65°C-70°C for example) by the heat associated with the electrochemical reaction, and part of the unused aqueous methanol solution is vaporized. The carbon dioxide and the unused aqueous methanol solution flow from the anode outlet I2 of the cell stack 102, through the pipe P6 into the aqueous solution radiator 108a, where they are cooled (down to approximately 40°C for example) by the radiator 108a. The cooling of the carbon dioxide and the unused methanol by the radiator 108a is performed by driving the fan 110. The carbon dioxide and the unused aqueous methanol solution which have been cooled then flow through the pipe P7, and return to the aqueous solution tank 116.

Meanwhile, most of the water vapor occurred on the cathode 104c in each fuel cell 104 is liquefied and discharged in the form of water from the cathode outlet 14 of the cell stack 102, with saturated water vapor being discharged in the form of gas. Part of the water vapor which was discharged from the cathode outlet 14 is supplied via the pipe P12 to the radiator 108b, where it is cooled and liquefied as its temperature decreases to or below the dew point. The radiator 108b liquefies the water vapor through operation of the fan 112. Discharge from the cathode outlet 14, which contains water (liquid water and water vapor), carbon dioxide and unused air, is supplied via the pipe P12, the radiator 108b and the pipe P13, to the water tank 118 where water is collected, and thereafter, discharged to outside via the pipe P14.

At the cathode 104c in each fuel cell 104, the vaporized methanol from the catch tank 130 and methanol which has moved to the cathode 104c due to crossover react with oxygen in the platinum catalyst layer, thereby being decomposed to harmless substances of water and carbon dioxide. The water and carbon dioxide which produced from the methanol are discharged from the cathode outlet I4, and supplied to the water tank 118 via the radiator 108b. Further, water which has moved due to water crossover to the cathode 104c in each fuel cell 104 is discharged from the cathode outlet I4, and supplied to the water tank 118 via the radiator 108b. The water collected in the water tank 118 is recycled appropriately by pumping operation of the water pump 146, through the pipes P15, P16 to the aqueous solution tank 116, and is used as water for the aqueous methanol solution.

While the fuel cell system 100 is generating electric power, a concentration detection routine for aqueous methanol solution is performed regularly for efficient power generation by each fuel cell 104 and prevention of premature deterioration of the fuel cell 104. Based on the detection result, the methanol concentration of aqueous methanol solution which is to be supplied to the cell stack 102 is adjusted to approximately 3 wt.%, for example, in the aqueous solution tank 116. Specifically, the fuel pump 128 is driven whereby methanol fuel is supplied from the fuel tank 114 to the aqueous solution tank 116 via the pipes P1, P2 based on the detection result of the methanol concentration. Likewise, the water pump 146 is driven whereby water is returned from the water tank 118 to the aqueous solution tank 116 based on the detection result of the methanol concentration.

Next, an abnormality determination operation in the aqueous solution supply means according to the fuel cell system 100 will be described with reference to Fig. 5.

The operation is performed during power generation in the fuel cell system 100.

First, the detection valve 156 is opened based on an instruction from the CPU 158 (Step S1), and the system checks if a predetermined amount of time (three seconds for example in the present embodiment, as an amount of time sufficient for appropriate supply of aqueous methanol solution to the ultrasonic sensor 154) has passed (Step S3). The system waits until the predetermined time has passed, and upon a lapse of the predetermined time, the detection valve 156 is closed (Step S5) . In this way, aqueous methanol solution is introduced into the ultrasonic sensor 154, or aqueous methanol solution in the ultrasonic sensor 154 is replaced by a new amount.

Then, the ultrasonic sensor 154 measures a travel time of an ultrasonic wave from the transmitter unit 154a to the receiver unit 154b, i.e., detection is made for concentration information of the aqueous methanol solution (Step S7). Based on a result of the detection, the system determines if concentration information of the aqueous methanol solution was detected successfully or not, i.e., if the ultrasonic wave traveled from the transmitter unit 154a to the receiver unit 154b (Step S9).

If concentration information of the aqueous methanol solution was not detected, the system determines that gas is introduced into a space between the transmitter unit 154a and the receiver unit 154b, and an abnormality exists on the upstream side than the ultrasonic sensor 154 in the aqueous solution supply means. Specifically, the system determines that an abnormality exists between the branching section A and the receiver unit 154b of the pipe P17, on the upstream side than the branching section A in the pipe P4, in the aqueous solution pump 136, in the pipe P3, in the aqueous solution tank 116, in the pipe P7, in the aqueous solution radiator 108a or in the pipe P6, and that as a result, aqueous methanol solution is not supplied normally.

If concentration information was not successfully detected in Step S9, the NG count which indicates the number of unsuccessful detection of concentration information is incremented and stored in the memory 162 (Step S11) . Then, the system checks if the NG count has exceeded a predetermined number (ten times for example) or not (Step S13). If the NG count has not exceeded the predetermined number, the operation goes back to Step S1. As described, even when the system determines that it is impossible to detect concentration information in Step S9, the system does not determine that an abnormality exists in the aqueous solution supply means if the NG count is one. The process from Steps S1 through S11 is repeated until the NG count reaches the predetermined number.

It should be noted here that with the predetermined time in Step S3 being three seconds and the predetermined number in Step S13 being ten times for example, Step S13 will give a YES when concentration information detection has been unsuccessful for not shorter than 30 (=3 x 10) seconds, in the present embodiment.

Even if the aqueous solution pump 136 stops and fuel supply to the cell stack 102 is shut off, it is possible to generate power for approximately one minute, using fuel in the cell stack 102. In other words, the electrolyte film 104a can be damaged if one minute has passed since the fuel supply is stopped. Therefore, if the predetermined number in Step S13 is set to ten and the time necessary for the determination is within one minute, it is possible to detect whether or not an abnormality exists without a risk of damaging the electrolyte film 104a.

If Step S13 determines that the NG count has exceeded the predetermined number, the CPU 158 determines that an abnormality exists on the upstream side than the ultrasonic sensor 154 in the aqueous solution supply means which includes the aqueous solution pump 136, etc., and a notification is made by displaying the determination result in the display portion 28b (Step S15). Then, an error process which includes stopping the air pump 138 is performed (Step S17), the NG count stored in the memory is cleared (Step S19), and the operation comes to an end.

On the other hand, if concentration information is detected in Step S9, the system determines that no abnormality exists on the upstream side than the ultrasonic sensor 154 in the aqueous solution supply means. The NG count stored in the memory is cleared (Step S19), and the operation comes to an end.

In the fuel cell system 100 which operates as described, assume that an abnormality has occurred in the aqueous solution supply means; for example, assume that the rotating shaft of the aqueous solution pump 136 has broken, and it has become impossible to supply aqueous methanol solution. Then, it is no longer possible to supply aqueous methanol solution to the ultrasonic sensor 154, or the amount of supply decreases, resulting in introduction of gas into the ultrasonic sensor 154. As a result, detection of concentration information based on a physical property of aqueous methanol solution becomes impossible. By utilizing this phenomenon, it is possible to determine (detect) an abnormality which exists on the upstream side than the ultrasonic sensor 154 (concentration detection location) in aqueous solution supply means, based on a detection result of concentration information. Also, because a result of fuel concentration detection is used, it is possible to determine an abnormality in the aqueous solution supply means without providing new sensors for abnormality detection.

Also, when the aqueous solution pump 136 stops due to an abnormality, gas from the gas source, i.e., the gas layer 116a in the aqueous solution tank 116, is introduced into the main flow channel via the sub flow channel, i.e., the pipes P18 and P17. As a result, the liquid level in the main flow channel goes down to the liquid level in the aqueous solution tank 116. In this process, gas is introduced into the ultrasonic sensor 154, making possible to detect an abnormality in the aqueous solution pump 136 easily.

Further, by introducing aqueous methanol solution into the sub flow channel constituted by the pipes P17 and P18, it becomes possible to make concentration information detection while the flow of aqueous methanol solution is slowed down or stopped. This enables to detect an abnormality in the aqueous solution pump 136 accurately without stopping supply of aqueous methanol solution to the cell stack 102.

Also, since it is possible to control the amount of aqueous methanol solution which flows from the main flow channel to the sub flow channel easily with the detection valve 156, it is possible to detect abnormalities existing in the aqueous solution pump 136 smoothly in the sub flow channel while aqueous methanol solution in the main flow channel is supplied smoothly to the cell stack 102.

Further, a gas source is provided easily by simply connecting the sub flow channel with the gas layer 116a in the aqueous solution tank 116.

The present invention is applied suitably to fuel cell systems such as the fuel cell system 100 which are capable of making circulatory supply of aqueous methanol solution to the cell stack 102.

Further, by utilizing the ultrasonic sensor 154, it is possible to determine abnormalities in the aqueous solution supply means simply and reliably.

Also, if a determination is made that there is an abnormality in the aqueous solution supply means, it is possible to prevent deterioration of the electrolyte film 104a, by stopping the air pump 138. Further, if control is provided in such a way that the air pump 138 is driven after confirming that there is no abnormality in the aqueous solution supply means based on a result of concentration information detection at the time of start up, it becomes possible to prevent deterioration of the electrolyte film 104a reliably.

Further, by notifying abnormalities in the aqueous solution supply means, the convenience of the fuel cell system 100 is improved.

Also, according to the present invention, abnormalities in the aqueous solution supply means can be determined without providing new sensors for abnormality detection, and it is possible to construct the fuel cell system 100 compactly without increasing the number of constituent parts. Therefore, the present invention can be suitably applied to the motorbike 10.

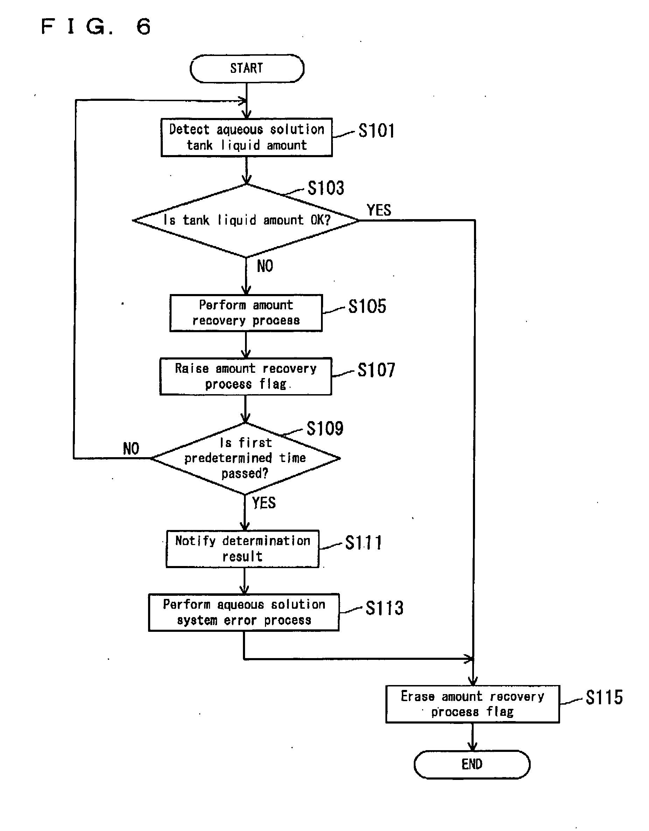

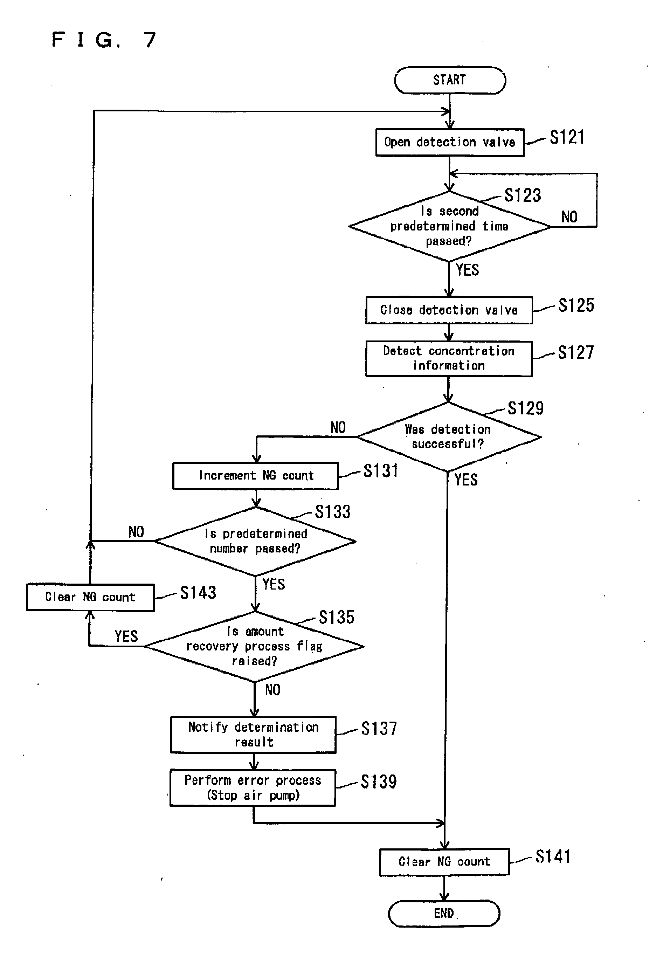

Next, another abnormality determination operation in the fuel cell system 100 will be described with reference to Fig. 6 and Fig. 7. In this example, routines in Fig. 6 and Fig. 7 are performed in parallel with each other during power generation in the fuel cell system 100.

First, the routine in Fig. 6 will be described.

The amount of liquid in the aqueous solution tank 116 is detected by the level sensor 122 (Step S101) and the CPU 158 checks if the amount of liquid in the aqueous solution tank 116 is not smaller than a predetermined amount (Step S103). If the amount of liquid in the aqueous solution tank 116 is smaller than the predetermined amount, the fuel pump 128 and/or the water pump 146 is driven to perform a liquid amount recovery process (Step S105), and a liquid amount recovery operation flag is raised (Step S107).

The liquid amount recovery process is an operation of driving the water pump 146 to bring the level of liquid in the aqueous solution tank 116 to a normal level, and driving the fuel pump 128 thereafter to adjust the concentration to within a predetermined range.

Then, the system checks if a first predetermined time (twenty seconds for example) has passed since the liquid amount recovery operation flag is raised (since the flag value was changed from 0 to 1) (Step S109). If the first predetermined time has not passed, the operation goes back to Step S101. On the other hand, if the first predetermined time has passed, the CPU 158 determines that there is an abnormality in the aqueous solution system, i.e., in the fuel pump 128, the water pump 146 or other means for supplying the aqueous solution tank 116 with fuel or water. The abnormality is notified by displaying the result of determination in the display portion 28b (Step S111). Then an error process for the aqueous solution system is performed (Step S113), and thereafter, the liquid amount recovery operation flag is erased (Step S115), and the routine comes to an end.

On the other hand, if Step S103 determines that the amount of liquid in the aqueous solution tank 116 is not smaller than the predetermined amount, the liquid amount recovery operation flag is erased (Step S115), and the routine comes to an end.

Next, the routine in Fig. 7 will be described.

First, the detection valve 156 is opened based on an instruction from the CPU 158 (Step S121), and the system checks if a second predetermined time (three seconds, for example, in the present embodiment, as an amount of time sufficient for appropriate supply of aqueous methanol solution to the ultrasonic sensor 154) has passed (Step S123). The system waits until the predetermined time has passed, and upon a lapse of the predetermined time, the detection valve 156 is closed (Step S125). In this way, aqueous methanol solution is introduced into the ultrasonic sensor 154, or aqueous methanol solution in the ultrasonic sensor 154 is replaced by a new amount.

Then, the ultrasonic sensor 154 detects concentration information of the aqueous methanol solution (Step S127), and the system determines if concentration information of the aqueous methanol solution was detected successfully or not, i.e., if the ultrasonic wave traveled from the transmitter unit 154a to the receiver unit 154b (Step S129).

If concentration information of the aqueous methanol solution was not detected, the system determines that gas is introduced into a space between the transmitter unit 154a and the receiver unit 154b, an abnormality exists on the upstream side than the ultrasonic sensor 154 in the aqueous solution supply means, and it is impossible to supply aqueous methanol solution normally.

If concentration detection was not successful in Step S129, the NG count which indicates the number of unsuccessful detection of concentration information is incremented and stored in the memory 162 (Step S131) . Then, the system checks if the NG count has exceeded a predetermined number (ten times for example) or not (Step S133). If the NG count has not exceeded the predetermined number, the operation goes back to Step S121. As described, even when the system determines that it is impossible to detect concentration information in Step S129, the system does not determine that an abnormality exists in the aqueous solution supply means if the NG count is one. The process from Steps S121 through S131 is repeated until the NG count reaches the predetermined number.

On the other hand, if Step S133 determines that the NG count has exceeded the predetermined number, the system checks if the liquid amount recovery operation flag is raised (Step S135). If the liquid amount recovery operation flag is not raised, the system determines that an abnormality exists in the aqueous solution supply means, i.e., on the upstream side than the ultrasonic sensor 154 but up to the aqueous solution tank 116. Specifically, the system determines that an abnormality exists between the branching section A and the receiver unit 154b in the pipe P17, on the upstream side than the branching section A in the pipe P4, in the aqueous solution pump 136, or in the pipe P3, and that as a result, aqueous methanol solution is not supplied normally. Then, a notification is made by displaying the determination result in the display portion 28b (Step S137), an error process which includes stopping the air pump 138 is performed (Step S139), the NG count stored in the memory is cleared (Step S141), and the operation comes to an end.

If Step S135 determines that the liquid amount recovery operation flag is raised, the NG count in the memory is cleared (StepS143) and the operation goes back to Step S121. If the liquid amount recovery operation flag is in the raised position as described, it is not possible to determine if an abnormality exists in the aqueous solution supply means, i.e., on the upstream side than the ultrasonic sensor 154 and up to the aqueous solution tank 116; therefore, the NG count is cleared and the operation is brought back to Step S121.

On the other hand, if concentration information is detected in Step S129, the system determines that there is no abnormality on the upstream side than the ultrasonic sensor 154 in the aqueous solution supply means, clears the NG count in the memory (Step S141) and ends the operation.

According to the fuel cell system 100 which operates as described, it is possible to determine abnormalities in the aqueous solution supply means more accurately, by taking also into account a detection result of the amount of liquid in the aqueous solution tank 1,16. In particular, it is possible to detect abnormalities advantageously between the aqueous solution tank 116 and the ultrasonic sensor 154 (concentration detection place).

Also, the same advantages are offered as in the case of operation shown in Fig. 5.

It should be noted here that the detection valve 156 may be provided in the branching section A where the pipes P4 and P17 are connected with each other.

Also, notification means is not limited to the display portion 28b, but may be provided by a speaker for example, to provide an audible notice.

Temperature detection of the aqueous methanol solution is not limited to detection by the temperature sensor 150. For example, a temperature sensor may be provided near the ultrasonic sensor 154 so that the temperature of the aqueous methanol solution in the pipe P17 can be detected.

The location of the ultrasonic sensor 154 is not limited to within the pipe P17. For example, the sensor may be provided in whichever of the pipes P3 through P5. In this case, it becomes possible to detect abnormalities on the upstream side than the ultrasonic sensor 154 in the aqueous solution supply means. In a case where the ultrasonic sensor 154 is provided in the pipe P3 (on the upstream side than the aqueous solution pump 136), it is possible to detect abnormalities further in the aqueous solution pump 136.

In the above-described embodiment, an ultrasonic sensor 154 is used as concentration detection means for detecting a concentration of aqueous methanol solution based on a physical property of the aqueous methanol solution; however, this is not limiting. The concentration detection means may be provided by any sensor which can make a physical detection of the concentration based upon refraction index, dielectric constant, infrared ray absorbency index, viscosity, solidification point, etc. Such a sensor is provided at a location where gas is introduced into the sensor at a time of abnormality in the aqueous solution supply means.

Also, the gas source is not limited to the gas layer 116a in the aqueous solution tank 116, but may be ambient air outside of the fuel cell system 100.

The fuel cell system according to the present invention is applicable not only to motorbikes but also to any transport equipment such as automobiles, marine vessels, etc.

In the embodiment described above, methanol is used as fuel and aqueous methanol solution is used as fuel aqueous solution. However, the present invention is not limited by this, and the fuel may be provided by other alcoholic fuel such as ethanol, and the aqueous fuel solution may be provided by aqueous solution of the alcohol, such as aqueous ethanol solution.

Also, the present invention is applicable to fuel cell systems mounted with a reformer or stationary type systems as long as a liquid fuel is used. Further, the present invention is applicable to fuel cell systems for personal computers, portable devices, small electronic appliances, etc.

The present invention being thus far described and illustrated in detail, it is obvious that these description and drawings only represent examples of the present invention, and should not be interpreted as limiting the invention. The spirit and scope of the present invention is only limited by words used in the accompanied claims.

## Claims

1. A fuel cell system comprising:
a fuel cell;
aqueous solution supply means for supplying the fuel cell with aqueous fuel solution;
concentration detection means provided in the aqueous solution supply means for detecting concentration information of the aqueous fuel solution based on a physical property of the aqueous fuel solution; and
determination means for determining an abnormality in the aqueous solution supply means based on a detection result from the concentration detection means.

2. The fuel cell system according to Claim 1, wherein the aqueous solution supply means includes an aqueous solution pump, and
wherein the concentration detection means is located where gas is present when the aqueous solution pump is stopped, in the aqueous solution supply means.

3. The fuel cell system according to Claim 2, wherein the aqueous solution supply means includes aqueous solution holding means for holding the aqueous fuel solution to be supplied to the fuel cell, a main flow channel connected with the fuel cell, and a sub flow channel branching off the main flow channel and connected with a gas source, and
wherein the concentration detection means is located higher than a liquid level in the aqueous solution holding means when the aqueous solution pump is stopped.

4. The fuel cell system according to Claim 3, wherein the concentration detection means is provided in the sub flow channel.

5. The fuel cell system according to Claim 4, further comprising flow-in control means for controlling a flow of the aqueous fuel solution into the sub flow channel.

6. The fuel cell system according to Claim 3, wherein the gas source is provided by a gas layer in the aqueous solution holding means.

7. The fuel cell system according to Claim 1, wherein the aqueous solution supply means includes aqueous solution holding means for holding the aqueous fuel solution to be supplied to the fuel cell, and is capable of making circulatory supply of the aqueous fuel solution to the fuel cell.

8. The fuel cell system according to Claim 7, further comprising liquid amount detection means for detecting an amount of liquid in the aqueous solution holding means,
wherein the determination means determines an abnormality in the aqueous solution supply means based on a detection result from the concentration detection means and a detection result from the liquid amount detection means.

9. The fuel cell system according to Claim 1, wherein the concentration detection means is provided by an ultrasonic sensor including a transmitter unit for transmitting an ultrasonic wave and a receiver unit for receiving the ultrasonic wave.

10. The fuel cell system according to Claim 1, further comprising: air supply means for supplying the fuel cell with air which contains oxygen; and
air supply control means for controlling operation of the air supply means based on a determination result from the determination means.

11. The fuel cell system according to Claim 1, further comprising notification means for notifying a determination result from the determination means.

12. Transport equipment comprising the fuel cell system according to one of Claims 1 through 11.

13. A method of operating a fuel cell system including a fuel cell and aqueous solution supply means for supplying the fuel cell with aqueous fuel solution, the method comprising:
a concentration detection step of detecting concentration information of the aqueous fuel solution based on a physical property of the aqueous fuel solution; and
a determination step of determining an abnormality in the aqueous solution supply means based on a detection result in the concentration detection step.
